# EUROPEAN PATENT SPECIFICATION

(11) **EP 0 294 829 B1**
(45) Date of publication and mention of the grant of the patent: **02.11.1994**
(21) Application number: 88109277.9
(22) Date of filing: 10.06.1988
(51) Int. Cl.: C08G 18/50, C09D 175/04, C08G 18/10, C08G 18/30, C08G 18/32

(54) **Fluorinated polyisocyanates suitable as paint components**
Fluorierte Polyisocyanate, geeignet als Komponenten von Farbzusammensetzungen
Polyisocyanates fluorés utiles comme composants de revêtements

(30) Priority: 11.06.1987 IT 2087187
(43) Date of publication of application: 14.12.1988
(73) Proprietor: AUSIMONT S.p.A., I-20121 Milano (IT)
(72) Inventor: Re, Alberto, I-20122 Milan (IT); De Giorgi, Marco, I-21100 Varese (IT)
(74) Representative: Barz, Peter, Dr.

(56) References cited:
- EP-A- 0 192 190
- EP-A- 0 235 380
- US-A- 3 931 454
- US-A- 4 085 137

## Description

This invention relates to fluorinated polyisocyanates and to the polymerizable compositions prepared therefrom.

The resins of the present invention are particularly useful as protective coatings for example in the electronics and optics industry, where a protection from chemical and atmospherical agents as well as high electrical, optical and surface properties are required.

Polyisocyanic resins and the use thereof as starting products for preparing polyurethane resins for uses such as conformal coatings of printed circuits, electronic components, coils and transformers, are known in the art. An example thereof are the fluorinated polyisocyanates prepared, according to Italian application 23184 A/85, by starting from perfluoropolyether diols which are reacted with diisocyanates and polyols.

Their function is that of coating the apparatus with a protective film capable of preventing or minimizing a decay of the performances due to pollution, the main and most common cause thereof being the presence of humidity in the environment.

Further polluting agents capable of damaging the printed circuits can derive from manufacturing processes, such as for example residual organic solvents, metal particles, inks, powders, or they can derive from handling, such as for example fingerprints and fatty cosmetic residues.

In all these cases, the effect of pollution can be removed or remarkably reduced by the application of a protective coating, which furthermore provides a certain protection from impacts and vibrations.

US-A-4 085 137 discloses polyfunctional poly(perfluoroalkylene oxide) compounds e.g., compounds of formula A⁅CF₂O(CF₂CF₂O)ₘ(CF₂O)ₙCF₂⁆A' where A and A' are reactive radicals containing a polymerizable functional group, e.g. of formula -C(O)N(CH₂CH₂OH)₂. Said compounds are said to be useful a monomers in the preparation of polymeric materials possessing unusual low temperature stability and resistance to solvents.

Various conformal coating systems are known in the art, among which the most broadly utilized are the acrylic coatings, the epoxy coatings, the silicone, polyimide, and non-fluorinated polyurethane resins.

Each of such families differs from the others as to application method and specific properties.

In the case of polyurethane coatings, the use of the polyisocyanates of the present invention permits to obtain, by equal applicative modalities, coatings endowed with improved properties as compared with the ones obtainable by using the known non-fluorinated polyurethane products, in particular:
- excellent electric properties;
- excellent resistance to humidity;
- extremely low surface energy (high oil and water repellency);
- self-lubricating properties (low friction coefficient);
- high shelf-life;
- low refraction index.

The polyisocyanates forming the object of the present invention are obtained starting from polyols of the perfluoropolyether type, having a hydroxy functionality higher than 2 and preferably higher than 3. Said polyols can be used also in admixture with the corresponding perfluoropolyether diols, the mixture having, of course, a functionality degree higher than 2 and preferably higher than 3.

The polyols to be used according to the present invention are represented by the following general formula :

(OH)ₐT - R_{f} - T'(OH)ₐ,

where a and a' are 1 or 2, the sum a+a' being higher than 2; R_{f} is a difunctional radical having a perfluoropolyether structure, an average molecular weight ranging from 400 to 7000, and consisting of sequences of oxyperfluoroalkylene units selected from :
-CF₂O-, -CF₂CF₂O-, -CF₂CF₂CF₂O-, 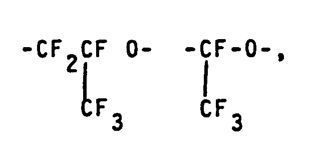
-CF₂CF₂CH₂O-
T and T', equal to or different from each other, represent a linking group between the perfluoropolyether chain and the -OH groups and can be a divalent alkylene or (poly)oxyalkylene radical, preferably -(CH₂)ₓ- where x = 1-4, or -CH₂O(CH₂CH₂O)_{y}CH₂CH₂-, where y = 0-4.
At least one of the groups T, T' is a trivalent radical characterized in that it contains at least one ether or amide bond, such as for example : 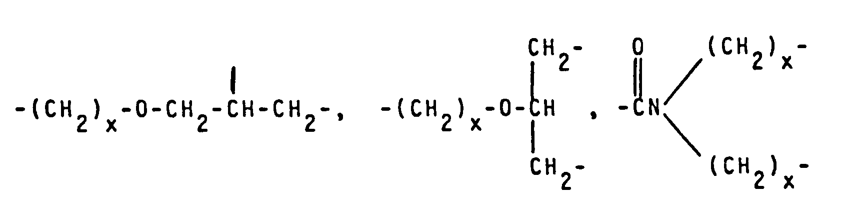
or a plurality of alkyleneoxy groups such as for example : 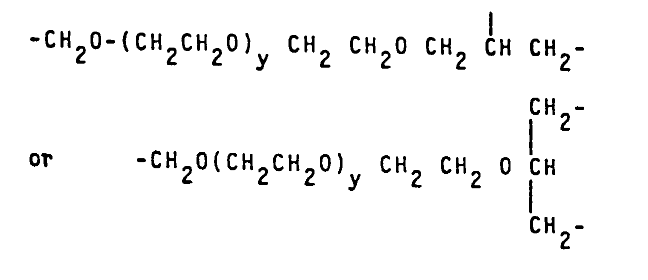
In the above formulas, x and y are the same as defined hereinbefore.

The discussed perfluoropolyether polyols are obtainable by introducing -OH groups at the end of perfluoropolyether chains according to known methods, such as for example :
- reduction of an ester end group -COOR, whereby a -CH₂OH group is obtained;
- reaction of an end group -CH₂OH with epichlorohydrin to obtain a dihydroxy end group 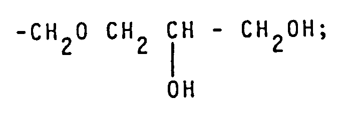
- reaction of an acid end group -COOH (or COF) with diethanolamine to obtain the end group : 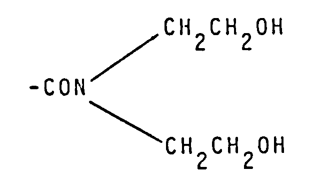
- reaction of an end group -CH₂OH with diglycidyl other to obtain a dihydroxyl end group.

Some of the abovesaid reactions are described in particular in US-A-3,810,874.

Starting perfluoropolyethers which are useful to obtain the perfluoropolyether polyols cited hereinabove are in particular the ones having the following structure:
A(CF₂CF₂O)ₙ(CF₂O)ₘA', where A and A' are end groups of the acid type -CF₂COF, -COF, -COOH, -CF₂COOH, or of the ester type -CF₂COOR, -COOR (R = alkyl ) suitable for being converted into hydroxylated groups, as mentioned above; the m/n ratio ranges from 0.2 to 2 and preferably from 0.1 to 1.2, the sum (m+n) being such as to be in the molecular weight ranges specified hereinabove. Products of this type are described in US-A-3,847,978. 3,847,978.

Other perfluoropolyethers which are suitable for obtaining the perfluoropolyether polyols in question are the ones consisting of sequences of perfluorooxyalkylene units of the following classes:
I) 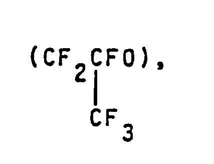 (CFXO) where X = F or CF₃, said units being statistically distributed along the perfluoropolyether chain;
II) (CF₂CF₂O), 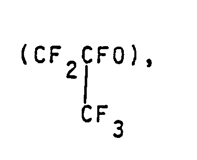 (CFXO) where X = F or CF₃, said units being statistically distributed along the perfluoropolyether chain;
III) 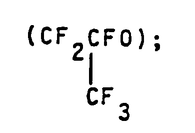
IV) (CH₂CF₂CF₂O);
V) (CF₂CF₂CF₂O);
VI) 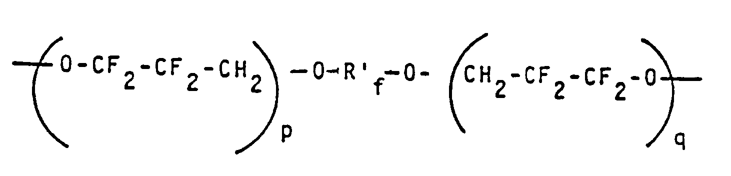 where R'_{f} is a fluoroalkylene group, preferably containing 1 to 8 carbon atoms, p and q are integers from 1 to 10 and (p + q) is at least 2;
VII) 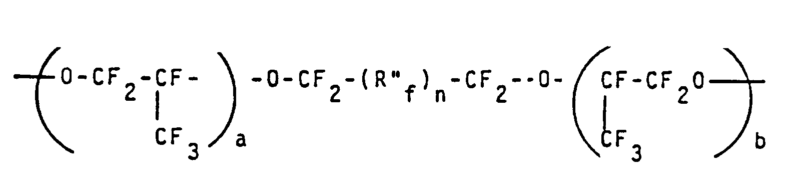 where R''_{f} is a fluoroalkylene group, preferably containing 1 to 8 carbon atoms, n is 0 or 1, a and b are integers and (a+b) is at least 1;
VIII) (CF₂CF₂O).

The starting perfluoropolyethers of classes II, V, VIII can be functionalized, if necessary, at both ends by means, for example, of the separation process described in IT-A-22920 A/85, which gives rise to acid end groups -COF, which are readily convertible to hydroxylated end groups.

The fluorinated polyisocyanates forming the object of the present invention are those obtained starting from the above-defined perfluoropolyether polyols, by reaction with OCN-R₂-NCO diisocyanates, whereby obtaining the substitution of the -OH groups by isocyanate groups having structure -OCONHR₂-NCO Thus, a first type of polyisocyanate of general formula :

(Z)ₐT-R_{f}-T'(Z)_{a'} (I)

is obtained, wherein Z is an isocyanate group having abovesaid structure -OCONHR₂-NCO, R₂ being an alkylene, cycloalkylene, alkyl-cycloalkylene, arylene, alkylarylene divalent radical containing from 2 to 20 carbon atoms. The meanings of R_{f,} T, T', a, a' are the same as defined hereinabove.

The polyisocyanates of formula (I) are convertible to polyisocyanates having a higher -NCO functionality degree (i.e, those of formula (II)) by reacting them with a polyol of general formula :

R₁(OH)ₜ (III),

where t = 2-4 and R₁ is an alkylene, cycloalkylene, fluoroalkylene radical, or a polyoxyalkylene radical having a molecular weight from 200 to 4000, or a polyester radical having a molecular weight from 200 to 4000.

Other types of radicals R₁ are the ones of general formula R-N(CₙH₂ₙ-)₂ (IV), where R = alkyl (in diol) or of general formula: 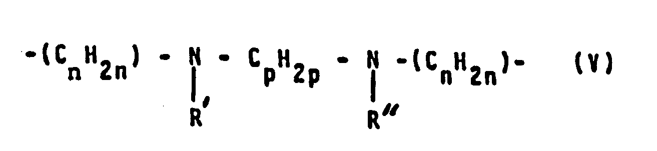
wherein R'and R'' equal or different from each other, are alkyl or -CₙH₂ₙ- groups, p and n being integers of from 1 to 10 (in triols and tetraols).

From the reaction of the polyol of general formula (III) with the polyisocyanate of general formula (I) it is possible to obtain, as explained above, a polyisocyanate having a higher functionality degree, represented by general formula : 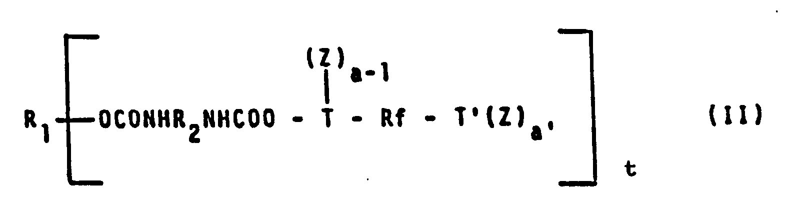
where t = 2-4.

For the preparation of the polyisocyanates corresponding to general formulas I and II it is possible to advantageously utilize diisocyanates of both the aromatic type such as e.g. 2,4- and 2,6-toluenediisocyanate, xylylenediisocyanate, 4,4'-diphenylmethane diisocyanate, and of the aliphatic type, among which hexamethylenediisocyanate, isophoronediisocyanate, 4,4'-dicyclohexylmeihanediisocyanate, cyclohexyl1,4-diisocyanate.

Preferred are the aliphatic diisocyanates and, among them, isophoronediisocyanate (IPDI) and 4,4'-dicyclohexylmethanediisocyanate (H₁₂MDT).

Any polyol corresponding to general formula (III) is utilizable for preparing the polyisocyanates of the invention.

Some examples of utilizable polyols are: ethylene glycol, 1,3-propylene glycol, 1,4-butylene glycol, trimethylolpropane, trimethylolethane, glycerine, 1,2,6-hexanetriol, pentaerythritol, polyethylene glycol, polypropylene glycol, polybutylene glycol or polyester polyols known in the art.

The fluorinated polyisocyanates according to general formula II have a free NCO content, calculated on a dry basis, ranging from 1.5 to 9% by weight, preferably from 3 to 7%. Preferred are those obtained from the fluorinated perfluoropolyether polyol with a functionality equal to 4, with end groups T, T' of the type: 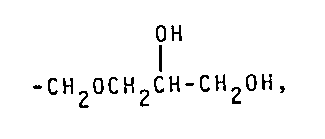
R₁ = difunctional or trifunctional radical and R₂ = aliphatic radical.

According to a preferred method, the polyfunctional polyether polyol and the diisocyanate are charged, in the first step, into the reactor and are reacted at a temperature ranging from 40 to 100°C.

On conclusion of the reaction, to the resulting product corresponding to formula I, which is already utilizable as such, polyol R₁(OH)ₜ of formula III or a mixture of polyols is added, which results in an increase in the polyisocyanate functionality.

In this second step, the reaction temperature ranges from 20 to 100°C.

The reaction is conducted in the presence of proper solvents, which are free from active hydrogen, such as for example : dimethylformamide, butyl acetate, ethylene glycol diacetate, cellosolve acetate, polyoxyethylene monoethylether acetate, etc.

With a view to increasing the reaction rate it is advisable to operate in the presence of small amounts ( ≦ 0.1% by weight) of proper catalysts, among which there are tertiary amines such as diazodicyclooctane, dimethylcyclohexylamine and metallorganic derivatives such as dibutyltin diacetate, dibutyltin dilaurate, tin octoate, propyleneglycol monomethylether acetate, and mixtures thereof.

The preparation of the polyisocyanates according to the invention, of general formula II, or of mixtures thereof with those of formula (I), is conducted in two steps according to the following scheme, (if the starting product is a tetrol): 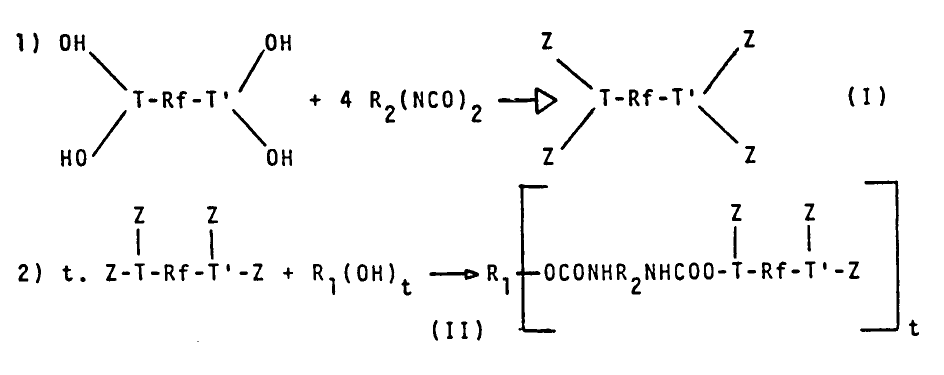
The polyisocyanates prepared according to the above-described method can be utilized either directly as they are obtained from the reaction, or after a proper dilution with compatible solvents such as xylols, toluene, or acetates of formula CH₃COOR₃, where R₃ is a straight or branched alkyl radical containing 2 to 6 carbon atoms, or ketones of general formula R₄CO-R₅, where R₄ and R₅ are straight or branched alkyl radicals containing 1 to 5 carbon atoms or chlorofluorohydrocarbons such as Delifrene® 113 etc.

In the use as protective coatings, the polyisocyanates of the invention can be utilized in single-component formulations, which are cross-linked by reaction with the environmental humidity, or in two-component formulations, in which a polyfunctional compound with active hydrogens acts as a cross-linking agent.

Particularly suited for this purpose due to their compatibility with the system are the polyols corresponding to the above general formulas IV and V.

Examples of such polyols are :
- tris(2-hydroxyethyl)amine (HOCH₂CH₂)₃N THEA
- N,N,N',N'-tetrakis(2-hydroxyethyl)ethylenediamine (HOCH₂CH₂)₂NCH₂CH₂N(CH₂CH₂OH)₂ THEED
- 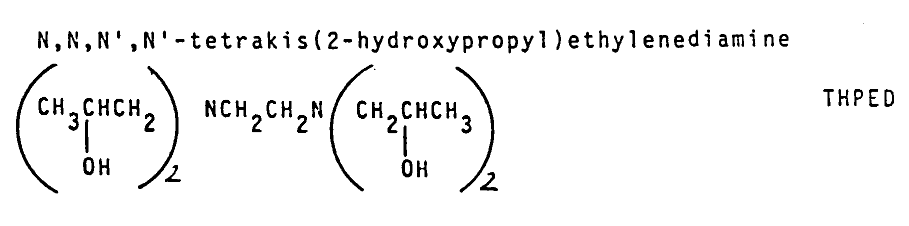
- N,N-bis(2-hydroxyethyl)methylamine CH₃N(CH₂CH₂OH)₂.

The formulations for paints based on the polyisocyanates according to the invention can be additioned with usual pigments and fillers. Furthermore, as they have a sufficient fluorine content, they are compatible with fillers such as fluorinated polymers, in particular polytetrafluoroethylene.

The coating films obtained after drying of the paints according to the invention are characterized by the following properties :
- contact angle : from 100° to 110°, measured according to method ATICELCA MC 21-72;
- friction coefficient : from 0.1 to 0.3, measured according to standard ASTM D 1894-78;
- Sward hardness : from 40 to 70, measured according to stanard ASTM D 2134-66;
- resistance to humidostat and to salt spray fog: higher than 1,000 hours, measured according to standard ASTM B 117-73;
- low refraction index, measured according to standard ASTM D 542;
- excellent electric properties.
- high flexibility even at very low temperature (lower than -80%).

As already mentioned herein, the products according to the invention are suited to be used as conformal coatings in the electronic industry.

For a better understanding of the invention and the reduction to practice of same, some illustrative but not limitative examples are given hereinafter.

### Example 1 (comparative)

Into a 500 ml reactor equipped with stirrer, thermometer and reflux cooler, there were charged, in a nitrogen atmosphere, 150 g of a tetrafunctional derivative of Fomblin® having a perfluoropolyether chain of the type A'-(CF₂CF₂O)ₙ(CF₂O)ₘ-A wherein terminal groups A and A'represent 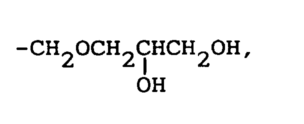
and n/m is 0.8, and having an equivalent OH weight of 514. Then 69.19 g (0.306 moles) of isophorone diisocyanate, 0.3 ml of a 0.2 N solution of dibutyltin diacetate in cellosolve acetate and 200 g of cellosolve acetate were added.

The mixture was heated to 70°C and this temperature was maintained during 4 hours, whereafter the whole was cooled, thereby obtaining a limpid solution of fluorinated polyisocyanate having a NCO content of 2.8% by weight (5.75% on dry basis), the structure of which is represented by the formula:

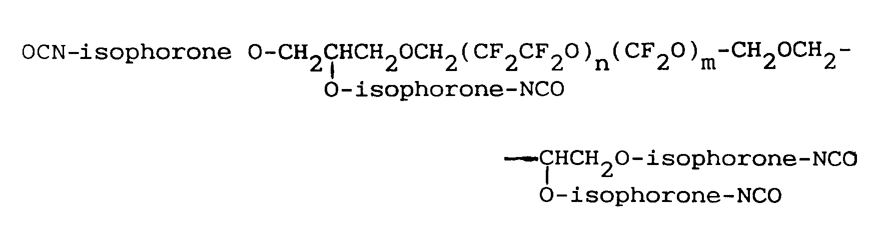

### Example 2

Into a 1 liter reactor equipped with stirrer, thermometer and reflux cooler, there were charged, in a nitrogen atmosphere, 150 g of a tetrafunctional derivative of Fomblin® having an OH equivalent weight of 472, 74.18 g (0.334 moles) of isophorone diisocyanate, 200 g of cellosolve acetate, and 0.33 ml of a 0.2 N solution of dibutyltin diacetate in cellosolve acetate.

The whole was heated to 70°C and maintained at this temperature for 2 hours, whereafter 3.58 g (0.04 moles) of 1,4-butane diol dissolved in 27.76 g of cellosolve acetate were added.

After a further 3-hour heating, the whole was cooled down to room temperature, so obtaining a limpid and colorless fluorinated polyisocyanate solution, the structure of which is represented by general formula 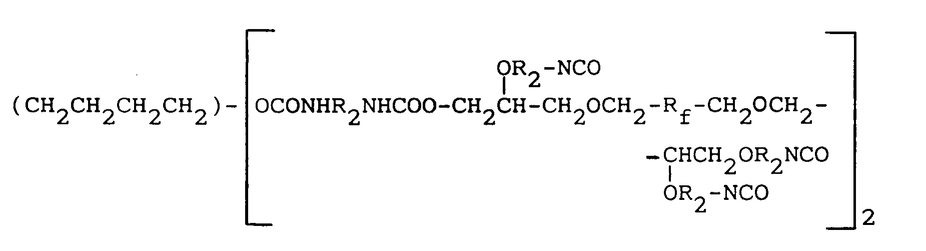
wherein R₂ is bivalent isophorone radical,
and having an NCO content equal to 2.3% by weight(theoretical : 2.44%)

### Example 3

Into a 1-liter reactor equipped with stirrer, thermometer and reflux cooler there were charged, in a nitrogen atmosphere, 150 g of a tetrafunctional derivative of Fomblin® having an OH equivalent weight of 514, 68.11 g (0.306 moles) of isophorone diisocyanate, 200 ml of cellosolve acetate, 0.30 ml of a 0.2 N solution of dibutyltin diacetate in cellosolve acetate. It was heated to 70°C and this temperature was maintained for 2 hours, whereafter 3.27 g of trimethylol propane dissolved in 21.4 g of cellosolve acetate were added.

After a further 3-hour heating, it was cooled down to room temperature, so obtaining a fluorinated polyisocyanate solution of general formula (II) with t = 3 and 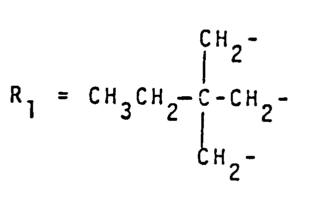
and having an NCO content = 2.4% by weight (theoretical: 2.35%).

### Example 4

A portion of each of the solutions prepared as is described in examples 1-3 were applied onto glass plates; after a 7-day drying in air at room temperature, colorless and transparent films having a thickness ranging from 35 to 40 µm were obtained.

The characteristics of the films obtained are reported in Table 1.

### Example 5

0.38 g of N,N,N',N'-tetrakis(2-hydroxypropyl)-ethylenediamine dissolved in 1 g of cellosolve acetate were added to 10 g of the solution obtained as described in example 2.

The resulting solution was spread on a glass plate, which was placed in an oven at 60°C and left there for 3 hours.

A 40 µm thick film, the characteristics of which are reported on Table 1, was obtained.

### Example 6

A portion of the solution described in example 2 was poured into Teflon® pans having round cross-sections of 10 cm diameter; after a 7-day drying in air, test-pieces were obtained, which were utilized to determine some electric properties.

Another portion of the same solution was utilized to obtain a coating on a copper plate board for the measurement of the surface resistivity.

The electric characteristics are reported on Table 2.

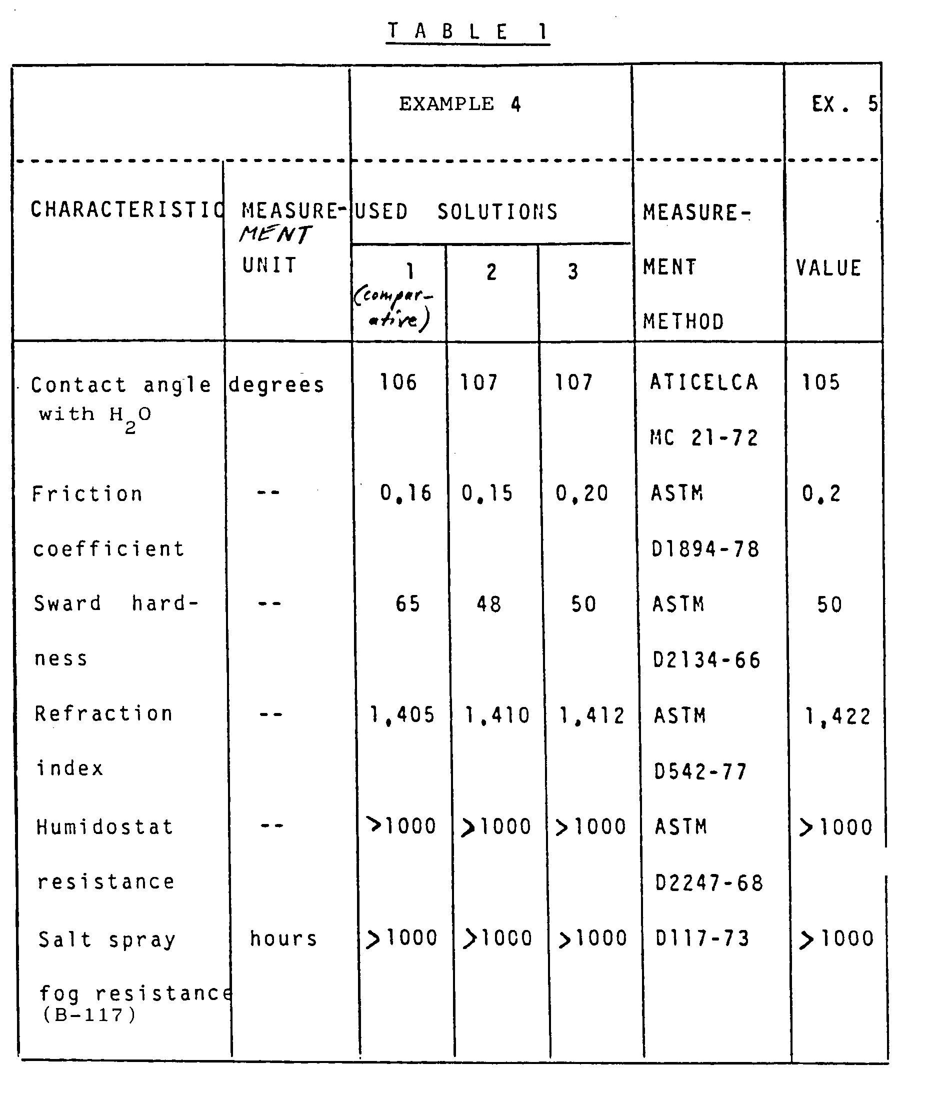

**TABLE 2**

| CHARACTERISTIC | UNIT OF MEASUREMENT | VALUE | METHOD |
|---|---|---|---|
| DIELECTRIC RIGIDITY | KV/mm | 26,0 | ASTM D149 |
| DIELECTRIC CONSTANT | -- | 2,7 | ASTM D150/50 HZ |
| DISSIPATION FACTOR | -- | 5x10⁻³ | ASTM D150/50 HZ |
| VOLUME RESISTIVITY | Ω .cm | 4,9x10¹⁵ | ASTM D257 |
| SURFACE RESISTIVITY | Ω | 3,5x10¹⁴ | ASTM D257 |
| After 24 h in H₂O at 25°C | Ω | 3,8x10¹⁴ | ASTM D257 |
| After 24 h at 60°C and 95% rel.humidity | Ω | 3,5.10¹⁴ | ASTM D257 |

## Claims

1. Fluorinated polyisocyanates of general formula (II): 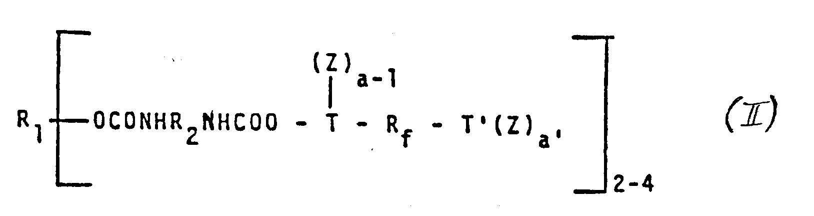 where:
R₁ is a divalent, trivalent or tetravalent alkylene, cycloalkylene, fluoroalkylene or polyoxyalkylene radical having a molecular weight from 200 to 4000, or a radical having a polyester structure and a molecular weight from 200 to 4000;
R₂ is an alkylene, cycloalkylene, alkylcycloalkylene, arylene, alkyl-arylene divalent radical containing from 2 to 20 carbon atoms;
R_{f} is a divalent radical having a perfluoropolyether structure and an average molecular weight from 400 to 7000, consisting of a sequence of oxyperfluoroalkylene units selected from:
-CF₂O, -CF₂CF₂O-, -CF₂CF₂CF₂O-, 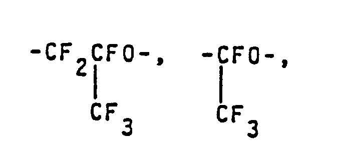 -CF₂CF₂CH₂O-;
T and T', like or unlike each other, represent a linking group between the perfluoropolyether chain and the monovalent Z groups and can be a divalent alkylene or (poly)oxyalkylene radical, at least one of them being a trivalent radical;
Z is a monovalent radical containing an isocyanate group having the structure -OCONHR₂NCO;
a and a' each are 1 or 2, their sum being higher than 2, said fluorinated polyisocyanates being further characterized in that they contain from 1.5% to 9% by weight of -NCO groups.

2. The fluorinated polyisocyanates of claim 1, wherein T, T'are selected from:
a) straight divalent alkylene radicals having 1 to 4 carbon atoms;
b) divalent oxyalkylene radicals of the type: -CH₂O(CH₂CH₂O)_{y}CH₂CH₂- wherein y is 0-4;
c) trivalent radicals containing at least one ether or amide bond.

3. The fluorinated polyisocyanates of claim 1, wherein R₂ is a divalent radical deriving from isophoronediisocyanate.

4. The fluorinated polyisocyanates of claim 1, wherein R₁ is the radical -CH₂CH₂CH₂CH₂-.

5. The fluorinated polyisocyanates of claim 1, wherein R₁ is the trivalent radical:

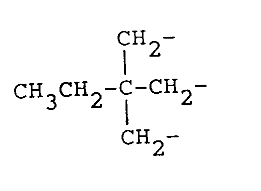

6. A process for preparing the polyisocyanates of claim 1, which comprises reacting, at a temperature of from 40 to 100°C a perfluoropolyether polyol of the general formula:
(OH)ₐ T-R_{f}-T'(OH)ₐ, with a diisocyanate OCN-R₂-NCO, thereby obtaining a polyisocyanate (Z)ₐT-R_{f}-T'(Z)ₐ, wherein Z is -OCONHR₂NCO, the polyisocyanate so obtained being then condensed by reaction at a temperature of from 20 to 100°C with a polyol R₁(OH)ₜ, wherein t = 2-4.

7. A paint containing, as film-forming substances, the polyisocyanates of any one of claims 1 to 5.

8. The paint of claim 7 containing, as a solid filler, polytetrafluoroethylene.

9. The use of the polyisocyanates of any one of claims 1 to 8 as film-forming substances suitable for obtaining coating protective layers (conformal coatings) on articles manufactured in the electronic industry.

## Patentansprüche

1. Fluorierte Polyisocyanate der allgemeinen Formel (II): 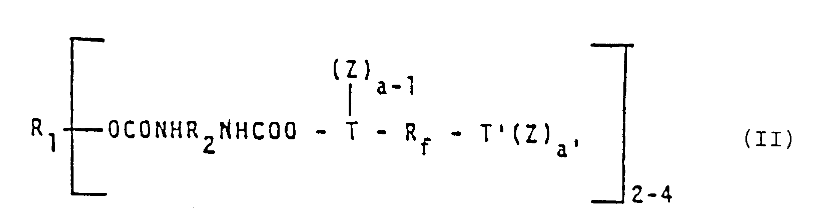 worin:
R₁ ein zweiwertiger, dreiwertiger oder vierwertiger Alkylen-, Cycloalkylen-, Fluoralxylen- oder Polyoxyalkylen-Rest mit einem Molekulargewicht von 200 bis 4000 oder ein Rest mit einer Polyesterstruktur und einem Molekulargewicht von 200 bis 4000 ist;
R₂ einen zweiwertigen Alkylen-, Cycloalkylen-, Alkylcycloalkylen-, Arylen-, Alkylarylen-Rest, der 2 bis 20 Kohlenstoffatome enthält, darstellt;
R_{f} ein zweiwertiger Rest mit einer Perfluorpolyetherstruktur und einem durchschnittlichen Molekulargewicht von 400 bis 7000 ist, der aus einer Abfolge von Oxyperfluoralkylen-Einheiten besteht, die ausgewählt sind aus:
-CF₂0-, -CF₂CF₂O-, -CF₂CF₂CF₂O-, 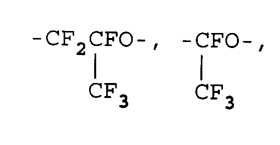 -CF₂CF₂CH₂O-;
T und T', gleich oder verschieden voneinander, eine Verbindungsgruppe zwischen der Perfluorpolyether-Kette und den einwertigen Gruppen Z repräsentieren und ein zweiwertiger Alkylenoder (Poly)oxyalkylen-Rest sein können, wobei mindestens einer davon ein dreiwertiger Rest ist;
Z ein einwertiger Rest ist, der eine IsocyanatGruppe mit der Struktur -OCONHR₂NCO enthält;
a und a' jeweils 1 oder 2 sind, wobei ihre Summe größer als 2 ist,
wobei die fluorierten Polyisocyanate weiter dadurch gekennzeichnet sind, daß sie 1,5 bis 9 Gewichts-% -NCO-Gruppen enthalten.

2. Fluorierte Polyisocyanate nach Anspruch 1, in denen T und T' ausgewählt sind aus :
a) linearen zweiwertigen Alkylenresten mit 1 bis 4 Kohlenstoffatomen;
b) zweiwertigen Oxyalkylen-Resten des Typs: -CH₂O(CH₂CH₂O)_{y}CH₂CH₂-, worin y 0 - 4 ist;
c) dreiwertigen Resten, die mindestens eine Ether- oder oder Amid-Bindung enthalten.

3. Fluorierte Polyisocyanate nach Anspruch 1, in denen R₂ ein von Isophorondiisocyanat abgeleiteter zweiwertiger Rest ist.

4. Fluorierte Polyisocyanate nach Anspruch 1, in denen R₁ der Rest -CH₂CH₂CH₂CH₂- ist.

5. Fluorierte Polyisocyanate nach Anspruch 1, in denen R₁ der dreiwertige Rest: 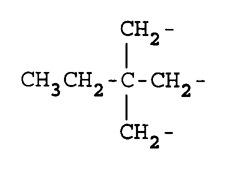 ist.

6. Verfahren zur Herstellung der Polyisocyanate nach Anspruch 1, welches umfaßt die Umsetzung, bei einer Temperatur von 40 bis 100°C, eines Perfluorpolyetherpolyols der allgemeinen Formel: (OH)ₐT-R_{f}-T'(OH)ₐ mit einem Diisocyanat OCN-R₂-NCO, wodurch man ein Polyisocyanat (Z)ₐT-R_{f}-T'(Z)ₐ erhält, worin Z -OCONHR₂NCO ist, wobei das so erhaltene Polyisocyanat dann durch Umsetzung bei einer Temperatur von 20 bis 100°C mit einem Polyol R₁(OH)ₜ, worin t = 2 - 4, kondensiert wird.

7. Lack, der als filmbildende Substanzen die Polyisocyanate nach irgendeinem der Ansprüche 1 bis 5 enthält.

8. Lack nach Anspruch 7, der als festen Füllstoff Polytetrafluorethylen enthält.

9. Verwendung der Polyisocyanate nach irgendeinem der Ansprüche 1 bis 8 als filmbildende Substanzen, die für den Erhalt von Schutzüberzugs-Schichten (sich anschmiegenden Überzügen) auf in der Elektronikindustrie hergestellten Gegenständen geeignet sind.

## Revendications

1. Polyisocyanates fluorés de formule générale (II) : 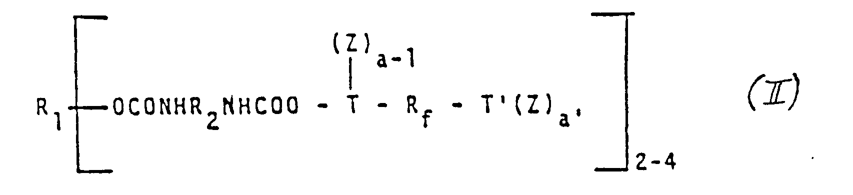 où :
- R₁ représente un radical alkylène, cycloalkylène, fluoroalkylène ou polyoxyalkylène, divalent, trivalent ou tétravalent, ayant une masse moléculaire de 200 à 4000, ou un radical ayant une structure de polyester et une masse moléculaire de 200 à 4000 ;
- R₂ représente un radical divalent alkylène, cycloalkylène, alkylcycloalkylène, arylène, alkylarylène, contenant de 2 à 20 atomes de carbone ;
- R_{f} représente un radical divalent ayant une structure de perfluoropolyéther et une masse moléculaire moyenne de 400 à 7000, consistant en une séquence d'unités oxyperfluoroalkylène choisies parmi :
-CF₂O, -CF₂CF₂O-, -CF₂CF₂CF₂O- , 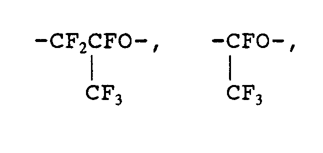 -CF₂CF₂CH₂O- ,
- T et T', identiques ou différents l'un de l'autre, représentent un groupe de liaison entre la chaîne perfluoropolyéther et les groupes Z monovalents et peuvent représenter un radical alkylène ou (poly)oxyalkylène divalent, au moins l'un d'eux représentant un radical trivalent ;
- Z représente un radical monovalent contenant un groupe isocyanate ayant la structure -OCONHR₂NCO ;
- a et a' représentent chacun 1 ou 2, leur somme étant supérieure à 2,
lesdits polyisocyanates fluorés étant en outre caractérisés par le fait qu'ils contiennent de 1,5% à 9% en poids de groupes -NCO.

2. Polyisocyanates fluorés selon la revendication 1, dans lesquels T, T' sont choisis parmi :
(a) les radicaux alkylène divalents linéaires, ayant de 1 à 4 atomes de carbone ;
(b) les radicaux oxyalkylène divalents du type :
-CH₂O(CH₂CH₂O)_{y}CH₂CH₂-
où y vaut 0-4 ;
(c) les radicaux trivalents contenant au moins une liaison éther ou amide.

3. Polyisocyanates fluorés selon la revendication 1, dans lesquels R₂ représente un radical divalent provenant de l'isophorone diisocyanate.

4. Polyisocyanates fluorés selon la revendication 1, dans lesquels R₁ est le radical -CH₂CH₂CH₂CH₂-.

5. Polyisocyanates fluorés selon la revendication 1, dans lesquels R₁ est le radical trivalent :

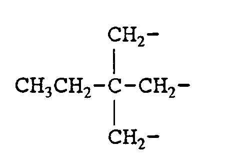

6. Procédé de préparation des polyisocyanates tels que définis à la revendication 1, qui comprend la réaction, à une température de 40 à 100°C, d'un perfluoropolyéther polyol de la formule générale :
(OH)ₐT-R_{f}-T'(OH)_{a'}
avec un diisocyanate OCN-R₂-NCO,
ce qui permet d'obtenir un polyisocyanate (Z)ₐT-R_{f}-T'(Z)_{a'} dans lequel Z représente -OCONHR₂NCO, le polyisocyanate ainsi obtenu étant ensuite condensé par réaction, à une température de 20 à 100°C, avec un polyol R₁(OH)ₜ, dans lequel t = 2-4.

7. Peinture contenant, en tant que substances filmogènes, les polyisocyanates tels que définis à l'une des revendications 1 à 5.

8. Peinture selon la revendication 7, contenant, en tant que charge solide, du polytétrafluoroéthylène.

9. Utilisation des polyisocyanates tels que définis à l'une des revendications 1 à 8 en tant que substances filmogènes appropriées pour obtenir des couches protectrices de revêtement (revêtements épousant la forme) sur des articles fabriqués dans l'industrie électronique.
